# EUROPEAN PATENT APPLICATION

(11) **EP 3 834 997 A1**
(43) Date of publication of application: **16.06.2021**
(21) Application number: 19215106.6
(22) Date of filing: 11.12.2019
(51) Int. Cl.: B25J 9/16, G06T 7/80

(54) **METHOD AND DEVICE FOR CALIBRATING A MACHINE VISION DEVICE FOR POSITION DETERMINATION**

(71) Applicant: Carl Zeiss Industrielle Messtechnik GmbH, 73447 Oberkochen (DE)
(72) Inventor: Kraszewski, Maciej, 76-200 Slupsk (PL); Wójcik, Adrian, 88-220 Osieciny (PL); Jaworski, Robert, 76-200 Slupsk (PL)
(74) Representative: Patentanwälte Bressel und Partner mbB

(57) **Abstract**

The invention relates to a method and device for calibrating calibrating at least one image capturing unit (2a, 2b, 2c, ..., 2n) of a machine vision device for position determination, wherein an optically recordable calibration element (8) is moved into a plurality of positions within a measurement volume (3) of the at least one image capturing unit (2a, 2b, 2c, ..., 2n), wherein a first set of positions is provided by determining the position of the calibration element in each of the positions, wherein a further set of positions is provided by determining the position of the calibration element (8) by a further position determining device, wherein at least one calibration parameter of the at least one image capturing unit (2a, 2b, 2c, ..., 2n) is determined depending on the first and the further set of positions.

## Description

The invention relates to a method and device for calibrating a machine vision device for position determination.

Machine vision measurement systems, in particular those which use image analysis for performing geometrical measurements, usually require the calibration of the image capturing units, e.g. cameras, which are used for image acquisition.

It is well known that such a calibration requires the determination of calibration parameters, in particular so-called extrinsic parameters and so-called intrinsic parameters, of said image capturing units. Once these parameters are determined, the position determination based on the images acquired by said image capturing units can be performed accurately.

Numerous approaches for such a calibration exists. Well known are calibration approaches which use the calibration element or calibration target which e.g. comprise a dot grid pattern or a checkerboard pattern with well-known geometric properties. By taking multiple images of such a target, the above mentioned calibration parameters can be determined.
Performing calibration with such a calibration element can be difficult in particular in the case that the machine vision system covers the large field of view. In such a case, the following problems can occur. First, the calibration element, in particular the plate with one of the above mentioned patterns, needs to be very large which makes the manufacturing of such a calibration element expensive or even impossible. Second, a proper calibration requires to move the calibration element into various positions and orientations, wherein the position and orientation requires to be constant during image acquisition. This requires an adequate calibration element carrying system which can also be very expensive.

The document "Z. Zhang, A flexible new technique for camera calibration, IEEE Transactions on pattern analysis and machine intelligence, December 2000, volume 22, pages 1330-1334" discloses the technique to easily calibrate a camera.

The document "L. Perez et. al., Robot guidance using machine vision techniques in industrial environments: a comparative review, Sensors (Basel). 2016 Mar 5;16(3). pii: E335. doi: 10.3390/s16030335" discloses that, given a point in a scene, it's corresponding point in the image can be obtained by mathematical models which is a direct problem. Further disclosed is that this direct problem is to determine a set of parameters that describe the mapping between 3D points in the world coordinate system and the 2D image coordinates.

The US 2017/258531 A1 discloses optical tracking systems and methods based on passive markers.

There is the technical problem of providing a method and a system for calibrating a machine vision device for position determination which facilitate the calibration of machine vision devices with a large field of view, in particular which decrease the costs of the elements needed for such a calibration.

The solution to said technical problem is provided by the subject-matter with the features of the independent claims. Further advantageous embodiments are provided by the subject-matter with the features of the sub claims.

Proposed is a method for calibrating at least one image capturing unit of a machine vision device for position determination. Calibration of the image capturing unit can be performed by determining at least one calibration parameter. The machine vision device can comprise one or more than one image capturing unit(s). An image capturing unit can be a camera, in particular a CCD camera or a CMOS camera.

Further, a measurement volume can be assigned to the machine vision device, wherein the measurement volume denotes the volume in which objects can be imaged by the at least one image capturing unit of the machine vision device, in particular by all image capturing units of the machine vision device.

Further, the machine vision device can comprise at least one evaluation unit, in particular an evaluation unit comprising or being provided by at least one microcontroller or integrated circuit. By means of said evaluation unit, images acquired by the at least one image capturing unit can be processed in order to determine the spatial position and/or the spatial orientation of an imaged object in a reference coordinate system, in particular the world coordinate system.

The image processing can be performed using the calibration parameter(s), in particular the aforementioned extrinsic and intrinsic parameters of the at least one image capturing unit.

To determine the calibration parameter(s), an optically recordable calibration element is moved into a plurality of positions within the measurement volume of the at least one image capturing unit.

In particular, the calibration element can be moved through different regions, in particular preselected regions, of the measurement volume, wherein in each of said regions, at least one position is determined. This can be performed by using a positioning device which will be explained in detail later. The calibration element can have or provide exactly one or more than one, e.g. three, four, five or more than five optically recordable pattern(s). This pattern can e.g. be a checkerboard pattern, the dot grid pattern or any other pattern being optically recordable by the at least one image capturing unit. In particular, the optically recordable calibration element can be identified in an image, e.g. by adequate image processing methods. The optically recordable calibration element can e.g. be a passive element.

In particular, the calibration element can comprise an inner marker body having an elliptical shape and a geometric center, said inner marker body being filled with color spectrum points radially spread with respect to the geometric center, wherein a color value of each spectrum point of the inner marker body is calculated as a function of an angle defined between a reference line crossing the central point and a further line crossing the central point as well as the respective spectrum point. In this context, the reference line can be any line crossing the central point, wherein said reference line, however, is the same for all spectrum points.

This advantageously allows a very accurate position determination by the machine vision system, in particular if the optical tracking method described in US 2017/258531 A1 is used to perform the position determination

A maximum dimension of the calibration element can be smaller than a maximum dimension of the measurement volume. It is e.g. possible that the ratio between the maximum dimension of the calibration element and the maximum dimension of the measurement volume is equal to or smaller than 10%, in particular if the maximum dimension of the measurement volume is equal to or larger than 1 m. In this case, the maximum dimension, e.g. diameter, of the calibration element can be equal to or smaller than 0.1 m. In other words, the dimension of the calibration element can be significantly smaller than the maximum dimension of the measurement volume.

Further, a first set of positions is provided by determining the position of the calibration element in each of the positions by the machine vision device. In other words, the position values of the first set are determined by the machine vision device, in particular the aforementioned evaluation unit. The positions of the first set can be two-dimensional (2D) positions in a coordinate system of the at least one image capturing unit, in particular in the coordinate system of the image plane of the image capturing unit. If the machine vision device comprises more than one image capturing unit, such a first set of positions can be determined for each image capturing unit.

The positions of the first set can be relative positions, wherein a relative position denotes a position change between the actual position and the most recently determined position or between the actual position and a fixed reference position, in particular in the coordinate system of the at least one image capturing unit.

According to the invention, a further set of positions is provided by determining the position of the calibration element by a further position determining device. In other words, the position values of the further set are determined by the further position determining device. The further position determining device can be different from the machine vision device. The positions of the further set can be three-dimensional (3D) positions in a coordinate system of the further position determining device. The positions of the further set can also be relative positions, wherein a relative position denotes a position change between the actual position and the most recently determined position or between the actual position and a fixed reference position, in particular in the coordinate system of the further position determining device.

Further, the calibration parameter(s), in particular the aforementioned intrinsic and extrinsic parameters, of the machine vision device is/are determined depending on the first and the further set of positions.

In particular, at least one calibration parameter can be determined by minimizing a deviation between selected points from the first set and corresponding modeled points, wherein the modeled points are determined, in particular calculated, based on the corresponding points from the further set and a model of the machine vision system defined by or incorporating the searched calibration parameter(s). The selected points can be all points of the first set. It is, however, also possible to not use all points of the first set for the determination of the calibration parameter(s).

In other words, the points of the further set can be transformed into a common coordinate system, wherein the transformation is based on the calibration parameter(s). The calibration parameter(s) can be determined such that a a deviation in said common coordinate system is minimized, wherein the deviation is determined between the transformed points of the further set and the points of the first set or the transformed points of the first set. The deviation can e.g. be a distance.

Such a minimization can e.g. be performed by an optimization algorithm in which a cost function is provided by the aforementioned deviation or a deviation-dependent value and wherein the optimization parameter(s) are provided by the calibration parameter(s).

Preferably, the selected reference coordinate system can be the coordinate system of the image capturing unit. In this case, the positions of the further set can be transformed into the coordinate system of the image capturing unit, wherein the calibration parameter(s) provide parameters of said transformation.

Alternatively, the selected reference coordinate system can be the coordinate system of the further position determining device. In this case, the positions of the first set can be transformed into the coordinate system of the further position determining device, wherein the calibration parameter(s) provide parameters of said transformation. Alternatively, the selected reference coordinate system can be a common coordinate system different from the coordinate system of the further position determining device and from the coordinate system of the image capturing unit, e.g. the above mentioned world coordinate system. In this case, the positions of the first set can be transformed into the common coordinate system, wherein the calibration parameter(s) provide parameters of said transformation. The latter scenarios can in particular apply if the 2D position information of the image capturing unit can reliably be transferred into a 3D coordinate system, e.g. if multiple image capturing units and/or an adequately designed calibration element allow such a reliable transformation.

It is of course possible to choose further approaches to determine the at least one calibration parameter as a function of the positions of the first and the further set.

In other words, the position of the calibration element is tracked during its movement through the measurement volume. The result of the position tracking is then used to compare the position information of the image capturing unit/machine vision device with the position information of the position tracking in a comparison coordinate system and in order to determine the at least one calibration parameter accurately.

The proposed method advantageously allows to reliably and accurately determine the calibration parameter(s) of the at least one image capturing unit of the machine vision device with no need to use and handle the large calibration element which is in particular of advantage in the case of a machine vision device with a large field of view. The determined calibration parameter(s) is/are then used for operating the machine vision device, in particular to determine a position with this machine vision device. If the machine vision device comprises more than one image capturing unit, the proposed method can be performed for each image capturing unit in order to determine the unit-specific calibration parameter(s).

In a further embodiment, the further position determining device is a laser-based device. The laser-based device can in particular be an interferometric laser measurement device which can also be referred to as laser tracker. Such a device can comprise a laser interferometer and a reflector. The reflector can be rigidly attached to the calibration element or can be part of the calibration element. The reflector can be different from the optically recordable pattern mentioned above. The reflector can in particular be a retroreflective target. A position can be determined by generating laser light which is targeted towards the reflector and receiving the reflected light, wherein the position is determined as a function of the interference of the generated and the reflected light. The determined position can be the position of the reflector.

This advantageously allows a very accurate position determination or determination of a position change and thus also an accurate determination of the at least one calibration parameter.

The use of a laser-based device is a preferred embodiment of the invention. It is, however, also possible to use other position determining devices such as a magnetic tracking device or of further optical tracking device, e.g. a device using active or passive markers.

In alternative embodiment, the further position determining device is an encoder-based device. Such a device can use output values of encoders of the positioning device for positioning the calibration element. In this case, the position of the calibration element can e.g. be determined by a so-called forward calculation which uses the output values of the encoders as input values and outputs the position of the calibration element which is attached to the positioning device. This advantageously allows a simple but accurate determination of the position which uses existing systems and therefore decreases manufacturing costs of the device for calibrating a machine vision device.

In a further embodiment, at least one marker element of the further position determining device is arranged in a stationary manner with respect to the calibration element. The marker element can be part of the further position determining device. Preferably, the marker element is the aforementioned reflector of the laser-based position determining device. It is, however, also possible that the market element is the magnetic marker element or an optical marker element, in particular an infrared light reflecting element. That the marker element is arranged in a stationary manner with respect to the calibration element can mean that a change of position of the calibration element results in the same change of position of the marker element while their relative position does not change.

This advantageously allows a very simple comparison of the positions of the first and the further set and therefore a simple and fast determination of the at least one calibration parameter.

In a further embodiment the at least one marker element is a reflector. This and corresponding advantages have been explained before, in particular the advantage of enabling a very accurate position determination.

In a further embodiment, the calibration element is moved by a positioning device. The positioning device can be any device which allows to adjust or change the spatial position and/or the spatial orientation of the calibration element. The positioning device can be a controlled device which can e.g. be controlled by a user or a higher level system. By controlling the positioning device, the calibration element can be moved to desired positions.

This advantageously allows to position the calibration element such that preferably the whole measurement volume is covered and images can be acquired in numerous different positions of the calibration element. This in turn allows to determine at least one calibration parameter which is valid for the whole measurement volume and not only for a part of it. Therefore, the position determination of the machine vision device is improved.

In a further embodiment, the positioning device is a robot. The robot can e.g. be a joint-arm robot. It is, however, also possible to use other kinematic structures of robots in order to position the calibration element. Using a robot advantageously allows to use a well-established and easy-to-control system for positioning the calibration element. In this case, the encoder output signals of the positioning device, e.g. the robot, can be used in order to determine the position of the calibration element. In other words, the positioning device provides the further position determining device.

In a further embodiment, the calibration element and the at least one marker element are mounted to the positioning device, wherein the at least one marker element is not mounted on the calibration element. In other words, there is no direct mechanical connection between the market element and the calibration element. However, these elements are mounted to the same positioning device. This advantageously allows to move both elements simultaneously while an independent installation of these elements is provided which can e.g. be of advantage because of limited mounting space.

In a further embodiment, the at least one marker element is mounted to the calibration element. In this case, the marker element can be rigidly connected to the calibration element. Then, the calibration element can be mounted to the aforementioned positioning device. In particular, the calibration element can provide or be attached to a so-called and effector of the positioning device. This advantageously allows to use a prefabricated calibration-marker-element which can be simply attached to the positioning device and which allows to move both elements simultaneously.

In a further embodiment, the orientation of the calibration element is held constant during the movement into the plurality of positions. In other words, all positions of the first and the further set are determined with the same orientation. This advantageously allows an easy handling of the calibration element for calibration. Compared to the teaching of "Z. Zhang, A flexible new technique for camera calibration, IEEE Transactions on pattern analysis and machine intelligence, December 2000, volume 22, pages 1330-1334", no change of the orientation of the calibration element is required for the calibration which may result in complex movements of the positioning device. As the positions of the first and the further set can be provided as relative positions, i.e. position changes, sufficient information for determining the calibration parameter(s) are provided even if no orientation change is performed.

Further proposed is a system for calibrating at least one image capturing unit of a machine vision device for position determination. The system advantageously allows to perform a method according to one of the embodiments described in this disclosure. In other words, the system is configured such that such a method can be performed.

The system comprises the machine vision device with the at least one image capturing unit. Further, the system comprises at least one optically recordable calibration element and at least one positioning device for moving the calibration element into a plurality of positions within a measurement volume of the at least one image capturing unit.

Further, a first set of positions is providable by determining the position of the calibration element in each of the positions by the machine vision device.

According to the invention, the system comprises at least one further position determining device, wherein a further set of positions is providable by determining the position of the calibration element by the further position determining device.

The system further comprises at least one evaluation unit for determining at least one calibration parameter of the machine vision device depending on the first and the further set of positions.

This and corresponding advantages have been explained before.

In a further embodiment, a maximal diameter of the measurement volume is larger than 1 m. in this case, the machine vision device can provide a machine vision device with a large field of view for which-as explained before- the proposed system is of particular advantage.

In a further embodiment, the machine vision device comprises multiple image capturing units. This provides a good compromise between an accurate position determination and the number of elements of the machine vision device.

In a further embodiment, the calibration element is a passive element. This and corresponding advantages have been explained before.

The invention will be described with reference to the attached figures. These figures show:
- Fig. 1: a schematic view of a system for calibrating a machine vision device and
- Fig. 2: a schematic flow chart of a method for calibrating a machine vision device.

When, the same reference numerals denote elements with the same or similar technical features.

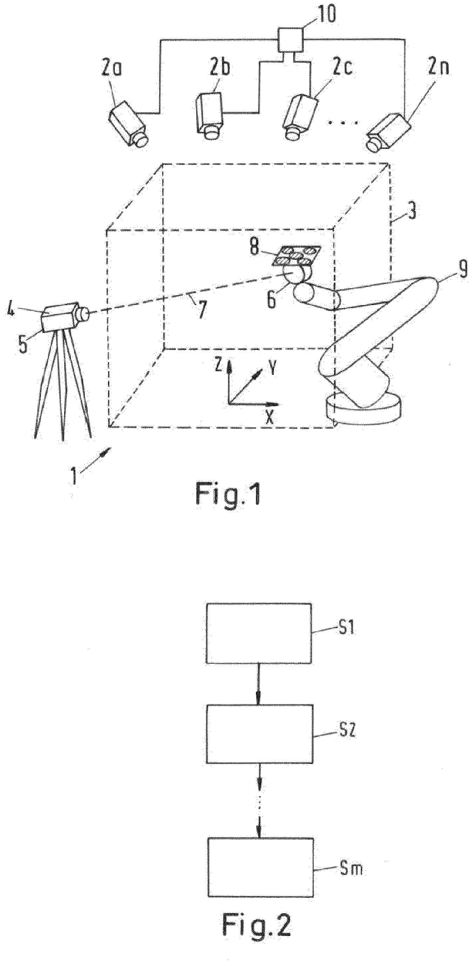

Figure 1 shows a schematic view of a system 1 for calibrating image capturing units 2a, 2b, 2c, ... ,2n of a machine vision device, wherein the machine vision device comprises n image capturing units 2a, 2b, 2c, ..., 2n which can e.g. be provided by cameras, in particular CCD cameras. Further shown is a measurement volume 3 which is indicated by dotted lines.

The system 1 further comprises the laser tracking device 4 which comprises a laser interferometer 5 and a reflector 6. Indicated by a dashed line is a laser ray 7. The interferometer 5 is pivotally mounted on a stand and comprises angle sensors (not shown). Further, the interferometer 5 can measure the distance between a reference point of the interferometer 5 and the reflector 6. Based on the output values of the angle sensors and the measured distance, a 3D position of the reflector 6 can be determined.

Further shown as a reference coordinate system which comprises a vertical axis z, wherein the vertical axis z is oriented parallel and opposite to the gravitational force. Further shown is a longitudinal axis x and a lateral axis y which span a plane which is perpendicular to the vertical axis z. Also, the longitudinal axis x is oriented perpendicular to the lateral axis y.

The position of the reflector 6 can be determined in this reference coordinate system.

Further shown is that the machine vision device comprises a calibration element 8, wherein this calibration element 8 has or provides multiple optically recordable patterns, in particular five optical patterns. Further shown is that this calibration element 8 is rigidly attached to the reflector 6. The reflector 6 is mounted to a positioning device 9 of the system 1, wherein the positioning device 9 is designed as an articulated-arm robot. The totality of the calibration element 8 and the reflector 6 is mounted to an end effector of this robot or provides an end effector.

By means of the robot, the calibration element 8 and the reflector 6 can be positioned simultaneously at multiple positions within the measurement volume 3 while the relative position between the calibration element 8 and the reflector 6 is kept constant. It is possible that the relative arrangement between the calibration element 8 and the reflector 6 is known. In each of these positions, each of the image capturing units 2a, 2b, 2c,... , 2n can acquire an image of the calibration element 8, wherein an evaluation unit 10 of the system 1 can determine a position of the calibration element 8 within the reference coordinate system.

Figure 2 shows a schematic flow diagram of a method for calibrating the image capturing units 2a, ..., 2n of the machine vision device which is e.g. shown in figure 1.

In a first step S1, a calibration element 8 and a reflector 6 are simultaneously moved to a first position. Then, the corresponding position of the (imaged) calibration element 8 in the image plane is determined for each image capturing unit 2a, 2b, 2c, ..., 2n, e.g. by acquiring images of the calibration element 8 and performing an image analysis, e.g. by the evaluation unit 10. This position is a 2D position.

Further, the corresponding position is also determined by means of the laser tracking device 4 in a 3D tracking device-specific coordinate system. Both positions are stored, e.g. in a memory unit (not shown).

In a second step S2, the calibration element 8 and the reflector 6 are simultaneously moved to a second position. As outlined before, the corresponding position of the imaged calibration element 8 in the image plane as well as in the 3D tracking device-specific coordinate system is determined. Both positions are again stored, e.g. in a memory unit (not shown).

Is is further possible that a relative position in the image plane as well as in the 3D tracking device-specific coordinate system is determined as the difference between the position determined in the second step S2 and the position determined in the first step S1.

This positioning and position determination step can be performed for multiple positions.

The positions or relative positions determined by the machine vision device, e.g. in the 2D image plane, provide a first set of positions, wherein the positions or relative positions determined by the laser tracking device 4 provide a further set of positions.

In this context, it is possible that the simultaneous movement is performed such that only a position but not an orientation of the calibration element 8 and reflector 6 is changed.

In a m-th step Sm, the extrinsic and intrinsic parameters of the machine vision device are determined as a function of the first and the further set of positions. Exemplary strategies for determining the parameters have been outlined before.

### Reference numerals

- 1: system for calibrating a machine vision device
- 2a, 2b 2c, 2n: image capturing units
- 3: measurement volume
- 4: laser tracker
- 5: laser interferometer
- 6: reflector
- 7: laser ray
- 8: calibration element
- 9: positioning device
- 10: evaluation unit
- S1: first step
- S2: second step
- Sm: m-th step

## Claims

1. Method for calibrating at least one image capturing unit (2a, 2b, 2c, ..., 2n) of a machine vision device for position determination, wherein an optically recordable calibration element (8) is moved into a plurality of positions within a measurement volume (3) of the at least one image capturing unit (2a, 2b, 2c, ..., 2n), wherein a first set of positions is provided by determining the position of the calibration element in each of the positions by the machine vision device,
**characterized in that**
a further set of positions is provided by determining the position of the calibration element (8) by a further position determining device, wherein at least one calibration parameter of the at least one image capturing unit (2a, 2b, 2c, ..., 2n) is determined depending on the first and the further set of positions.

2. The method according to claim 1, **characterized in that** the further position determining device is a laser-based device (4).

3. The method according to claim 1, **characterized in that** the further position determining device is an encoder-based device.

4. The method according to one of the preceding claims, **characterized in that** at least one marker element of the further position determining device is arranged in a stationary manner with respect to the calibration element (8).

5. The method according to claim 4, **characterized in that** the at least one marker element is a reflector (6).

6. The method according to one of the preceding claims, **characterized in that** the calibration element (8) is moved by a positioning device (9).

7. The method according to claim 6, **characterized in that** the positioning device (9) is a robot.

8. The method according to one of the claims 6 to 7, **characterized in that** the calibration element (8) and the at least one marker element are mounted to the positioning device (9), wherein the at least one marker element is not mounted on the calibration element (8).

9. The method according to one of the claims 1 to 7, **characterized in that** the at least one marker element is mounted to the calibration element (8).

10. The method according to the one of the preceding claims, **characterized in that** the orientation of the calibration element (8) is held constant during the movement into the plurality of positions.

11. System for calibrating at least one image capturing unit (2a, 2b, 2c, ..., 2n) of a machine vision device for position determination, wherein the system (1) comprises the machine vision device with the at least one image capturing unit (2a, 2b, 2c, ..., 2n), wherein the system (1) further comprises at least one optically recordable calibration element (8) and at least one positioning device (9) for moving the calibration element (8) into a plurality of positions within a measurement volume (3) of at least one image capturing unit (2a, 2b, 2c, ..., 2n), wherein a first set of positions is provided by determining the position of the calibration element (8) in each of the positions by the machine vision device,
**characterized in that**
the system (1) comprises at least one further position determining device, wherein a further set of positions is provided by determining the position of the calibration element (8) by the further position determining device, wherein the system (1) further comprises at least one evaluation unit (10) for determining at least one calibration parameter of the at least one image capturing unit (2a, 2b, 2c, ..., 2n) depending on the first and the further set of positions.

12. The system according to claim 11, **characterized in that** a maximal diameter of the measurement volume (3) is larger than 1 m.

13. The system according to claim 11 or 12, **characterized in that** the machine vision device comprises multiple image capturing devices (2a, 2b, 2c, ..., 2n).

14. The system according to one of the claims 11 to 13, **characterized in that** the calibration element (8) is a passive element.

## Amended claims

### Amended claims in accordance with Rule 137(2) EPC.

1. Method for calibrating at least one image capturing unit (2a, 2b, 2c, ..., 2n) of a machine vision device for position determination, wherein an optically recordable calibration element (8) is moved into a plurality of positions within a measurement volume (3) of the at least one image capturing unit (2a, 2b, 2c, ..., 2n), wherein a first set of positions is provided by determining the position of the calibration element in each of the positions by the machine vision device, wherein
a further set of positions is provided by determining the position of the calibration element (8) by a further position determining device, wherein at least one calibration parameter of the at least one image capturing unit (2a, 2b, 2c, ..., 2n) is determined depending on the first and the further set of positions, **characterized in that** the further position determining device is a laser-based device (4), wherein at least one marker element of the further position determining device is arranged in a stationary manner with respect to the calibration element (8).

2. The method according to claim 1, **characterized in that** the at least one marker element is a reflector (6).

3. The method according to one of the preceding claims, **characterized in that** the calibration element (8) is moved by a positioning device (9).

4. The method according to claim 3, **characterized in that** the positioning device (9) is a robot.

5. The method according to one of the claims 3 to 4, **characterized in that** the calibration element (8) and the at least one marker element are mounted to the positioning device (9), wherein the at least one marker element is not mounted on the calibration element (8).

6. The method according to one of the claims 1 to 4, **characterized in that** the at least one marker element is mounted to the calibration element (8).

7. The method according to the one of the preceding claims, **characterized in that** the orientation of the calibration element (8) is held constant during the movement into the plurality of positions.

8. System for calibrating at least one image capturing unit (2a, 2b, 2c, ..., 2n) of a machine vision device for position determination, wherein the system (1) comprises the machine vision device with the at least one image capturing unit (2a, 2b, 2c, ..., 2n), wherein the system (1) further comprises at least one optically recordable calibration element (8) and at least one positioning device (9) for moving the calibration element (8) into a plurality of positions within a measurement volume (3) of at least one image capturing unit (2a, 2b, 2c, ..., 2n), wherein a first set of positions is provided by determining the position of the calibration element (8) in each of the positions by the machine vision device,
wherein
the system (1) comprises at least one further position determining device, wherein a further set of positions is provided by determining the position of the calibration element (8) by the further position determining device, wherein the system (1) further comprises at least one evaluation unit (10) for determining at least one calibration parameter of the at least one image capturing unit (2a, 2b, 2c, ..., 2n) depending on the first and the further set of positions, **characterized in that** the further position determining device is a laser-based device (4), wherein at least one marker element of the further position determining device is arranged in a stationary manner with respect to the calibration element (8).

9. The system according to claim 8, **characterized in that** a maximal diameter of the measurement volume (3) is larger than 1 m.

10. The system according to claim 8 or 9, **characterized in that** the machine vision device comprises multiple image capturing devices (2a, 2b, 2c, ..., 2n).

11. The system according to one of the claims 8 to 10, **characterized in that** the calibration element (8) is a passive element.
